# EUROPÄISCHE PATENTSCHRIFT

(11) **EP 2 390 160 B1**
(45) Veröffentlichungstag und Bekanntmachung des Hinweises auf die Patenterteilung: **31.01.2018**
(21) Anmeldenummer: 11166188.0
(22) Anmeldetag: 16.05.2011
(51) Int. Cl.: B62B 3/10, B62B 3/14, B62B 5/06

(54) **Stapelbarer Transportwagen**
Nestable transport trolley
Chariot de transport emboîtable

(30) Priorität: 27.05.2010 DE 102010021710
(43) Veröffentlichungstag der Anmeldung: 30.11.2011
(73) Patentinhaber: Wanzl Metallwarenfabrik GmbH, 89340 Leipheim (DE)
(72) Erfinder: Schlegelmilch, Britta, 89340, Leipheim (DE); Müller, Ralf, 86657, Bissingen (DE); Riesenegger, Markus, 89358, Ettenbeuren (DE); Eckert, Dr., Rainer, 73765, Neuhausen (DE)

(56) Entgegenhaltungen:
- WO-A1-97/21577
- WO-A2-96/23689
- US-A- 4 268 049
- US-A1- 2003 098 560
- US-A1- 2007 210 541

## Beschreibung

Die Erfindung betrifft einen stapelbaren Transportwagen mit den Merkmalen im Oberbegriff des Hauptanspruchs.

Stapelbare Transportwagen sind aus dem Stand der Technik bekannt. Solche finden in SB-Geschäften Verwendung und weisen üblicherweise ein Gestell mit einem Korb für die Ablage von Waren und mit einer rückseitigen verschwenkbaren Klappe auf, die meist mit einem Kindersitz ausgestattet ist. Es ist eine Schiebegriffeinheit vorgesehen, die am Gestell des Wagens angeordnet ist. Ferner kann eine untere Ablage vorgesehen sein.

Ein solcher Wagen ist beispielsweise aus dem europäischen Patent 1 562 816 B1 bekannt. Hierbei kann eine Platte vorgesehen sein, die die Beinöffnungen verschließt, die an der verschwenkbaren Klappe vorgesehen sind. Dadurch kann eine zusätzliche Ablage für Waren gebildet werden.

Neben dieser herkömmlichen Art, die Waren direkt in den Korb zu legen, gibt es das sogenannte Konzept des "Box-Shopping". Bei diesem werden Körbe, und hierbei insbesondere aus Kunststoff gebildete Handkörbe, in das Gestell des Wagens eingehängt. Die Handkörbe werden vorzugsweise von dem Kunden mitgebracht, mit Waren gefüllt und beladen nach Hause transportiert. Das aufwendige Umpacken der Waren von dem oder den Handkörben in den PKW entfällt hierbei.

Aus dem Stand der Technik sind verschiedene Arten von solchen Wagen bekannt. Es gibt Wagen wie sie z.B. in dem deutschen Patent 4 237 059 C2 oder der japanischen Patentanmeldung 2001122125 A2 beschrieben sind. Bei diesen Wagen sind maximal drei Handkörbe abstellbar. Um solche Wagen möglichst leicht manövrierbar zu halten, sind die Handkörbe möglichst versetzt übereinander angeordnet.

Eine andere Art eines Wagens ist aus dem französischen Patent 2 569 151 B1 bekannt. Bei diesem sind die Handkörbe auf unterschiedlichen Höhen untereinander am Gestell angeordnet. Dadurch ist eine optimale Zugänglichkeit zu den Handkörben gegeben.

Ein solcher Handkorb zum Anbringen an einem Gestell ist beispielsweise aus dem EU-Geschmacksmuster 595939-0001 bekannt.

Die internationale Patentanmeldung WO 96/23689 beschreibt darüberhinaus ein stapelbares Gestell, in das Handkörbe eingehängt werden. Hierbei werden die Körbe hintereinander und zudem untereinander, der S-Form des Gestells folgend, angeordnet. Auch ist ein Kindersitz oder eine Babyschale vorgesehen. Die Anordnung erfolgt für beide am höchsten Punkt des Gestells zwischen zwei Grifftragarmen.

Es können ein oder zwei Kindersitze angebracht sein. Diese sind zwischen dem Schiebegriff und den Handkörben vorgesehen.

Aus der DE 42 03 331 C2 ist ferner ein Transportwagen bekannt, der einen zweiten Warenbehälter aufweist. Dieser kann auch als Kindersitz verwendet werden, indem ein Drahtbügel, der im Warenbehälter vorgesehen ist, hochgeklappt wird.

Die Anordnung dieser Kindersitze hat sich als nicht vorteilhaft erwiesen, da eine ortsfeste Verbindung zwischen dem Gestell und dem bzw. den Kindersitzen nicht auf einfache Art hergestellt werden kann. Gleiches gilt für einen zweiten Warenbehälter, der am Griff angeordnet ist.

Weitere Transportwagen sind aus der US 2003/0098560 A1 und der US 4,268,049 A bekannt.

Die US-Schrift 2003/0098560 A1 offenbart einen Transportwagen gemäß dem Oberbegriff von Anspruch 1, der eine große Ladefläche mit einem Haltebügel aufweist. Ferner ist am Fahrgestell eine Griff-/Sitzanordnung vorgesehen. Hierbei ist die Griff-/Sitzanordnung mit einem Rückenlehnenabschnitt, einem Sicherheitsbügel und einem Handgriff ausgestattet, wobei die vorgenannten Bauteile einstückig mit dem Sitzabschnitt gebildet werden. Die Griff-/Sitzanordnung ist starr und ortsfest am Fahrgestell angeordnet.
In der US 4,268,049 A ist ein Wagen beschrieben, der eine Korbanordnung mit einem Kindersitz offenbart. Die Korbanordnung besteht aus zwei übereinander angeordneten Körben, die beide um 90° verschwenkbar am Fahrgestell des Wagens angeordnet sind. Zusätzlich ist am oberen Korb ein Kindersitz mit einem Griff vorgesehen. Zur Anordnung der Körbe und des Kindersitzes sind zwei zylindrische Stangen vorgesehen, die von den Körben, dem Kindersitz, sowie dem Fahrgestell aufgenommen werden. Beide beschriebene Wagen können jedoch nicht zum gewünschten "Box-Shopping" verwendet werden. Zudem ist die Anordnung am Fahrgestell wegen der Teilevielfalt umständlich oder aber fraglich, inwiefern ausreichend Stabilität und somit Sicherheit für das Kind gegeben ist.

Die Aufgabe besteht nun darin, eine verbesserte Verbindung zwischen einem Kindersitz und/oder einem Warenbehälter und dem Gestell herzustellen.

Die Erfindung löst die Aufgabe mit den Merkmalen im Hauptanspruch. Weitere vorteilhafte Ausführungen sind in den Unteransprüchen beschrieben.

Durch die Einteiligkeit ist eine einfache Montage des Kindersitzes und/oder des Korbes am Gestell gegeben.

Ferner kann durch die Verwendung von Kunststoff eine kostengünstige Produktion gewährleistet werden.

Die Form des Kindersitzes ermöglicht eine bequeme Sitzhaltung des Kindes.

Die Erfindung wird anhand verschiedener Ausführungsbeispiele näher erläutert. Es zeigt
- Fig. 1a: einen Transportwagen mit einem Kindersitz und drei eingehängten Handkörben in 3-D-Ansicht,
- Fig. 1b: denselben Transportwagen in Seitenansicht,
- Fig. 1c: denselben Transportwagen in Rückansicht,
- Fig. 1d: denselben Transportwagen in Draufsicht,

- Fig. 2a: einen Transportwagen mit einem Kindersitz und ohne Handkörbe in 3-D-Ansicht,
- Fig. 2b: denselben Transportwagen in Seitenansicht,
- Fig. 2c: denselben Transportwagen in Rückansicht,
- Fig. 2d: denselben Transportwagen in Draufsicht,
- Fig. 3a: zwei Transportwagen gestapelt, mit einem Kindersitz und ohne Handkörbe in 3-D-Ansicht,
- Fig. 3b: dieselben Transportwagen in Seitenansicht,
- Fig. 3c: dieselben Transportwagen in Rückansicht,
- Fig. 3d: dieselben Transportwagen in Draufsicht,

- Fig. 4a: einen Kindersitz in 3-D-Ansicht,
- Fig. 4b: denselben Kindersitz in Seitenansicht,
- Fig. 4c: denselben Kindersitz in Vorderansicht,
- Fig. 4d: denselben Kindersitz in Draufsicht, sowie

- Fig. 5: einen Transportwagen mit einem Korb.

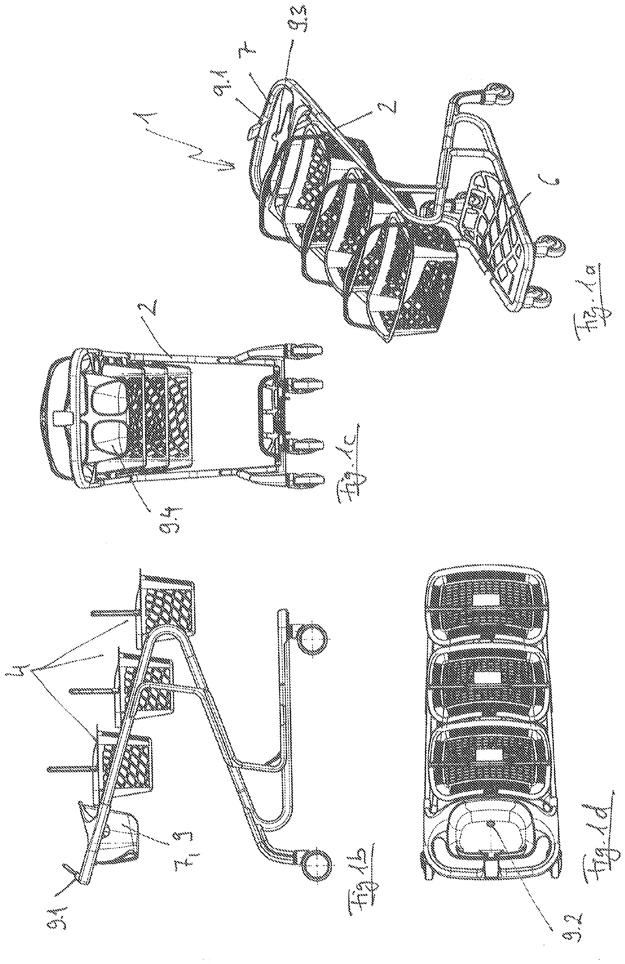

Die Erfindung betrifft einen stapelbaren Transportwagen 1 mit einem Fahrgestell 2 und Aufnahmen 3 für Handkörbe 4, sowie Rollen 5. Im unteren Bereich des Gestells 2 ist eine Auflage 6 vorgesehen. Diese ist im vorderen Bereich des Gestells beweglich gelagert, so dass ein Stapeln gleicher Wagen 1 gegeben ist. Vorzugsweise ist diese als gelasertes Blech ausgeführt. Ferner weist die Auflage 6 zwei Ösen rechts und links auf, die in das Fahrgestell 2 einrasten und der Auflage 6 Stabilität verleihen. Ein solcher Transportwagen 1 mit drei Handkörben 4 ist in den Figuren 1a bis d abgebildet.

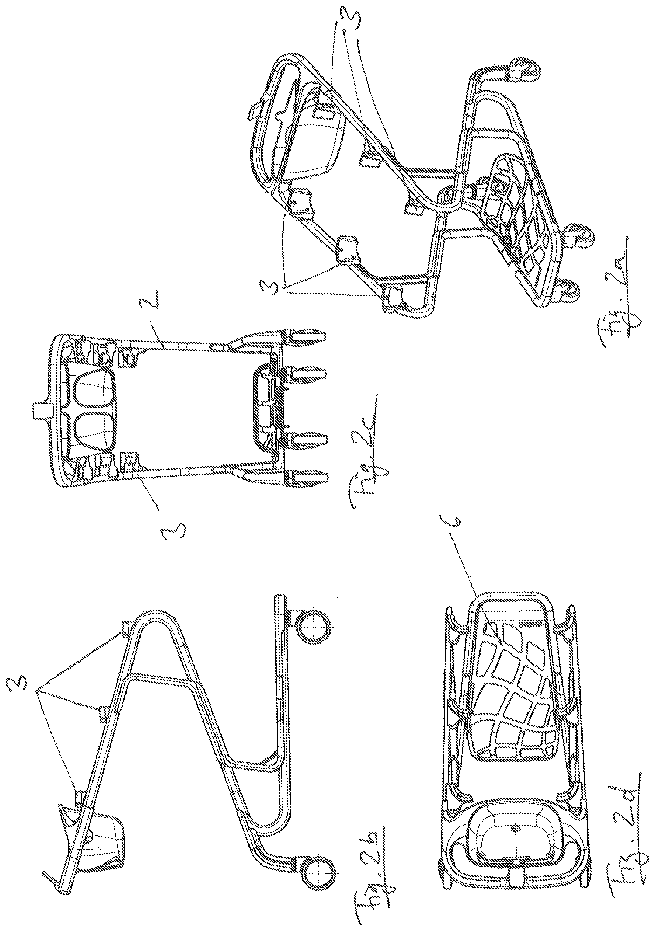

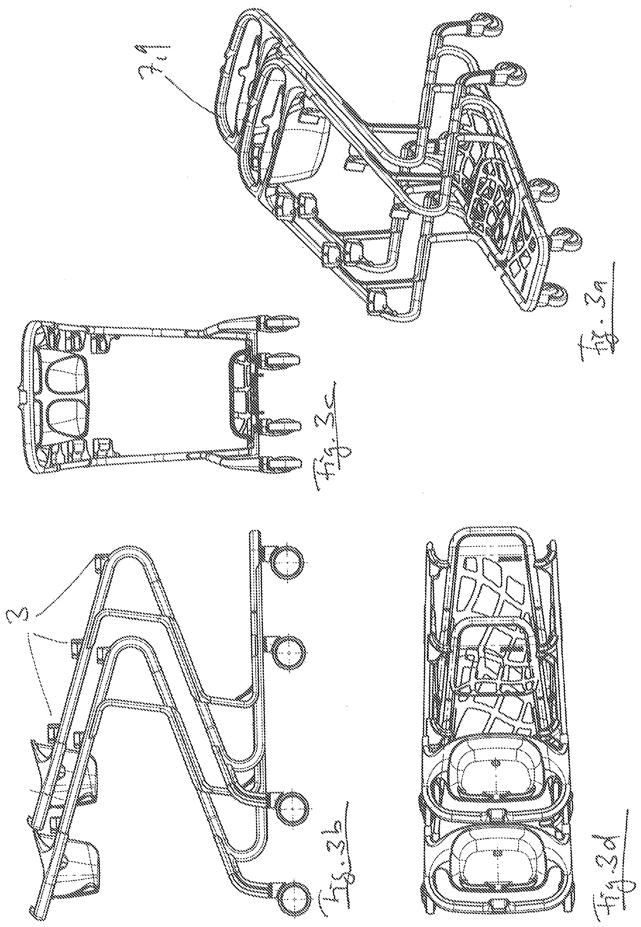

Wie in den Figuren 2a bis d und 3a bis d dargestellt, hat es sich als sinnvoll erwiesen, sechs Aufnahmen 3 für drei obere Handkörbe 4 am Gestell 2 anzuordnen. Die Aufnahmen 3 sind vorzugsweise aus Kunststoff hergestellt und mittels eines Sicherungsmittels, z.B. in Form einer Schraube, an dem Gestell 2 angeordnet. Durch den Einsatz des aus dem Stand der Technik bekannten Handkorbes 4 verrastet der Handkorb 4 in den beiden gegenüberliegenden Aufnahmen 3. Die Aufnahmen 3 sind in der Form, dass die drei Handkörbe 4 in verschiedenen Höhen am S-förmigen Fahrgestell 2 angeordnet sind. Durch diese Anordnung ist eine einfache und bequeme Zugänglichkeit zu den oberen drei Handkörben 4 gegeben.

Das Fahrgestell 2 kann in seinem vorderen Bereich einen Drahtanschlag aufweisen. Dieser dient als Auflage für den vordersten Handkorb 4.

Es kann ferner ein unterer Handkorb 4 vorgesehen sein. Dieser ist unterhalb der anderen Handkörbe 4 vorgesehen und an einer nicht näher dargestellten unteren Querverstrebung eingehängt. Die Form einer solchen Querverstrebung richtet sich nach der Gestalt des Handkorbes 4. Die Querverstrebung ist ortsfest am Fahrgestell 2 angeordnet und aus einem oberen u-förmigen Teil gebildet. Zusätzlich kann eine untere Querverstrebung vorgesehen sein.

Alternativ könnte auch eine Ablage für eine Kiste vorgesehen sein.

Wie in den Figuren 3a bis d dargestellt, werden die Wagen 1 ohne Handkörbe 4 gestapelt.

Das Fahrgestell 2 weist senkrechte Verstrebungen auf. Diese dienen der Stabilität und sind zusätzlich jeweils mit einer Verblendung, die vorzugsweise aus Kunststoff gefertigt ist, verdeckt. Diese Verblendungen sind mehrteilig gebildet und werden aufgeklipst. Auch Teile des Fahrgestells 2 sind mit solchen Verblendungen versehen. So ist z.B. für die Radanbindung eine Verblendung vorgesehen. Vorzugsweise ist diese Verblendung mehrteilig gestaltet.

Der Wagen 1, wie er in den Figuren 1 bis 3 dargestellt ist, weist vier Rollen 5 auf. Es wäre aber auch denkbar, einen Wagen 1 mit fünf Rollen 5 auszustatten.

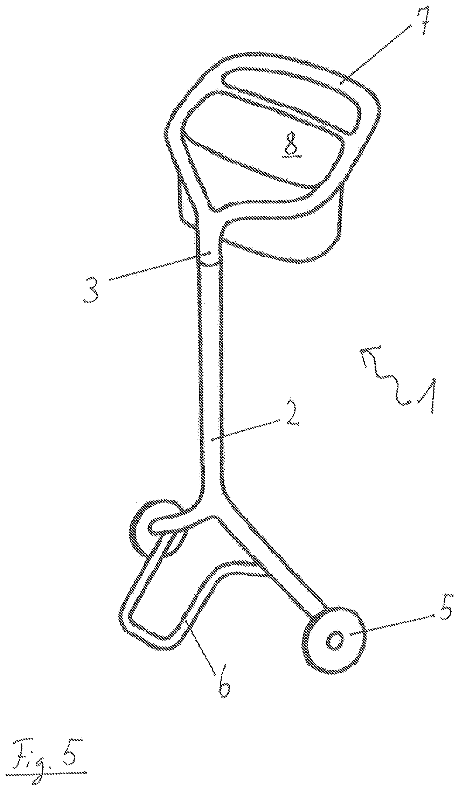

Im oberen Bereich des Fahrgestells 2 ist ein Handgriff 7 angeordnet. Ferner weist der Wagen 1 einen Kinderitz 9 und/oder einen Korb 8 auf. Die Figuren 1 bis 3 zeigen den Wagen 1 mit einem Kindersitz 9; Figur 5 zeigt einen Wagen 1 mit einem Korb 8.

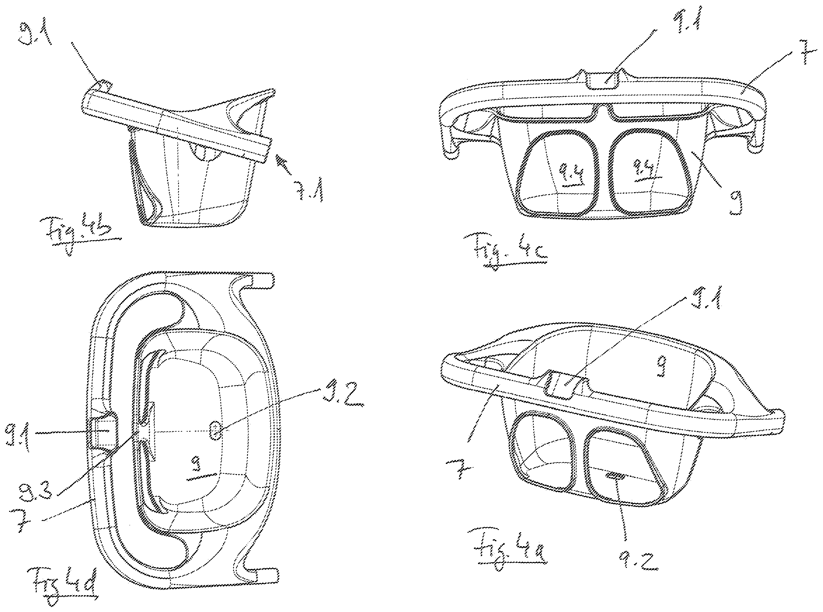

Handgriff 7 und Kindersitz 9 sind, wie in den Figuren 1 bis 3 und in Figur 4 dargestellt, einteilig gebildet.

Auch können Handgriff 7 und Korb 8 einteilig gebildet sein. Ein solcher Handgriff 7 ist in Figur 5 dargestellt.

Auch können Handgriff 7, Korb 8 und Kindersitz 9 einteilig gebildet sein. Ein Korb 8 wäre dann an dem Kindersitz 9 oder, alternativ am Griff 7 vorzusehen.

Die Anordnung des einteilig gebildeten Handgriffs 7 mit Kindersitz 9 und/oder Korb 8 erfolgt durch Aufstecken auf das Fahrgestell 2. Das Fahrgestell 2 ist aus Flachoval-Rohr gebildet. Die Enden 7.1 des Handgriffs 7 sind hohl ausgeführt und von ihrem Querschnitt entsprechend größer als das Flachoval-Rohr ausgeführt, dass sie auf das Flachoval-Rohr gesteckt werden und dort dauerhaft verweilen. Somit ist eine formschlüssige Verbindung gegeben. Ggf. kann ein zusätzliches Sicherungsmittel eingesetzt werden.

Ferner kann es, z.B. bei unterschiedlicher Form oder Größe der Querschnitte notwendig sein, einen Adapter zu verwenden. Ein solcher Adapter ist nicht dargestellt und bleibt in seiner Ausführungsform dem Fachmann überlassen. Er könnte beispielsweise ein einfacher Kunststoffzylinder sein, der beide Querschnitte miteinander verbindet.

Alternativ werden die oberen Aufnahmen 3 derart abgeändert, dass sie ebenso als Adapter verwendet werden können.

Der einteilig gebildete Handgriff 7 mit Kindersitz 9 und/oder Korb 8 ist vorzugsweise aus Kunststoff hergestellt. Hierfür wird insbesondere ein PP oder ein PE eingesetzt. Um die Kosten für die Produktion des Handgriffs 7 mit Kindersitz 9 und/oder Korb 8 gering zu halten, wird dieser vorzugsweise mittels eines Spritzgussverfahrens hergestellt. Der einteilig gebildete Handgriff 7 mit Kindersitz 9 und/oder Korb 8 kann vollflächig ausgeführt sein, oder weist zur Materialeinsparung Ausnehmungen auf. In Figur 4 ist ein vollflächiger Handgriff 7 mit einem Kindersitz 9 dargestellt.

Der einteilig gebildete Handgriff 7 mit Kindersitz 9 und/oder Korb 8 kann ein Münzpfandsystem aufweisen. Vorzugweise ist im Handgriff 7 dann eine nicht näher dargestellte Ausnehmung zum Einsetzen des Münzpfandsystems vorgesehen. Alternativ wird das Münzpfandsystem am Griff 7, dem Kindersitz 9, dem Korb 8 oder dem Gestell 2 angeordnet.

Ferner ist am einteilig gebildeten Handgriff 7 mit Kindersitz 9 und/oder Korb 8 eine Halterung 9.1 für ein mobiles Gerät wie z.B. ein Handy und hierbei insbesondere ein so genanntes Smartphone vorgesehen. Auch weist der einteilig gebildete Handgriff 7 mit Kindersitz 9 und/oder Korb 8 eine ID-Nummer auf, die in der Halterung 9.1 für das mobile Gerät angebracht ist. Es kann aber auch ein anderer Ort für das Anbringen der ID-Nummer vorgesehen sein.

Durch das Scannen der ID-Nummer und der Daten der Waren, die sich auf dem Wagen 1 befinden, kann mittels Smartphone die Menge an Waren und der zu bezahlende Preis für den jeweiligen Kunden ermittelt werden. Auch kann der Bezahlvorgang mittels Smartphone durchgeführt werden. Um ein mehrfaches Ein- und Auspacken der Waren für den Kunden zu vermeiden, bietet sich hier das Eingangs beschriebene System des "Box Shopping" an.

Oft sind weitere Halterungen z.B. für einen Handscanner und/oder einen Kaffeebecherhalter gewünscht. Daher kann der einteilig gebildete Handgriff 7 mit Kindersitz 9 und/oder Korb 8 mindestens eine weitere, nicht näher dargestellte Halterung für ein mobiles Gerät wie z.B. einen Handscanner und/oder einen Kaffeebecherhalter aufweisen.

Die Figuren 4a bis d zeigen einen einteilig gebildeten Handgriff 7 mit einem Kindersitz 9. Der Handgriff 7 ist U-förmig ausgeführt. Die U-Form des Griffs 7 ist durch den eigentlichen Kindersitz 9 abgeschlossen. Der Kindersitz 9 weist zwei Öffnungen 9.4 für die Beine eines Kleinkindes auf. In der Mitte des Griffs 7 ist eine Halterung 9.1 für ein mobiles Gerät wie z.B. ein Handy vorgesehen.

Ferner weist der Kindersitz 9 einen Taschenhaken 9.3 auf, der oberhalb der Öffnungen 9.4 für die beiden Beine des Kindes und mittig am Kindersitz 9 vorgesehen ist.

Darüberhinaus weist der einteilig gebildete Handgriff 7 mit Kindersitz 9 an seinem Boden eine Ausnehmung 9.2 auf.

Figur 5 stellt eine andere Art eines stapelbaren Transportwagens 1 dar. Er weist ein Fahrgestell 2 auf. Es sind Aufnahmen 3 für Handkörbe vorgesehen. Der Wagen 1 weist zwei Rollen 5 auf und sieht eine untere Ablage 6 vor. Am Fahrgestell 2 ist ein Handgriff 7 angeordnet. Der Wagen 1 weist einen Korb 8 auf.

Der Handgriff 7 und der Korb 8 sind einteilig gebildet. Vorzugsweise ist der einteilig gebildete Handgriff 7 mit Korb 8 auf das Fahrgestell 2 gesteckt. Hierfür kann - falls notwendig - ein Adapter eingesetzt werden. Der Handgriff 7 mit Korb 8 ist vorzugsweise aus Kunststoff, wie z.B. einem PP oder PE gebildet und vorzugsweise mittels eines Spritzgussverfahrens hergestellt. Der Handgriff 7 mit dem Korb 8 ist vollflächig ausgeführt. Es können aber auch Ausnehmungen vorgesehen sein. Ferner besteht die Möglichkeit, ein Münzpfandsystem anzuordnen oder eine Ausnehmung vorzusehen, in die das Münzpfandsystem eingebracht werden kann.

Auch können eine oder mehrere Halterungen für ein mobiles Gerät wie ein Handy, einen Handscanner und/oder einen Kaffeebecher am einteilig gebildeten Griff 7 mit Korb 8 vorgesehen sein. Auch kann der Griff 7 mit Korb 8 einen nicht näher dargestellten Taschenhaken aufweisen.

### Bezugszeichenliste

- 1: Transportwagen, Wagen
- 2: Fahrgestell
- 3: Aufnahmen
- 4: Handkorb
- 5: Rolle
- 6: untere Ablage
- 7: Handgriff, Griff
- 7.1: Enden
- 8: Korb
- 9: Kindersitz
- 9.1: Halterung (Handy)
- 9.2: Ausnehmung
- 9.3: Taschenhaken
- 9.4: Öffnung

## Patentansprüche

1. Stapelbarer Transportwagen mit einem Fahrgestell (2) und Aufnahmen (3) für Handkörbe (4), sowie Rollen (5) und einer unteren Ablage (6), wobei am Fahrgestell (2) ein Handgriff (7) angeordnet ist und wobei der Wagen (1) ferner einen Kindersitz (9) und/oder einen Korb (8) aufweist, wobei Handgriff (7) und Kindersitz (9), Handgriff (7) und Korb (8) oder Handgriff (7), Korb (8) und Kindersitz (9) einteilig gebildet sind,
wobei der einteilig gebildete Handgriff (7) mit Kindersitz (9) und/oder Korb (8) auf das Fahrgestell (2) gesteckt ist,
**dadurch gekennzeichnet, dass**
das Fahrgestell (2) aus einem Flachoval-Rohr gebildet ist, wobei die Enden (7.1) des Handgriffs (7) hohl und von ihrem Querschnitt entsprechend größer als das Flachoval-Rohr ausgeführt sind, dass sie auf das Flachoval-Rohr gesteckt werden und dort dauerhaft verweilen und somit eine formschlüssige Verbindung gegeben ist, und wobei ferner ein zusätzliches Sicherungsmittel eingesetzt werden kann. oder bei unterschiedlicher Form oder Größe der Querschnitte ein Adapter verwendet werden kann.

2. Stapelbarer Transportwagen nach Anspruch 1, **dadurch gekennzeichnet, dass** der einteilig gebildete Handgriff (7) mit Kindersitz (9) und/oder Korb (8) aus Kunststoff hergestellt ist.

3. Stapelbarer Transportwagen nach einem der vorhergehenden Ansprüche, **dadurch gekennzeichnet, dass** der einteilig gebildete Handgriff (7) mit Kindersitz (9) und/oder Korb (8) vollflächig ausgeführt ist.

4. Stapelbarer Transportwagen nach einem der vorhergehenden Ansprüche, **dadurch gekennzeichnet, dass** der einteilig gebildete Handgriff (7) mit Kindersitz (9) und/oder Korb (8) ein Münzpfandsystem aufweist.

5. Stapelbarer Transportwagen nach einem der vorhergehenden Ansprüche, **dadurch gekennzeichnet, dass** der einteilig gebildete Handgriff (7) mit Kindersitz (9) und/oder Korb (8) eine Halterung (9.1) für ein mobiles Gerät wie z.B. ein Handy vorsieht.

6. Stapelbarer Transportwagen nach Anspruch 5, **dadurch gekennzeichnet, dass** der einteilig gebildete Handgriff (7) mit Kindersitz (9) und/oder Korb (8) eine ID-Nummer aufweist, die in der Halterung (9.1) für das mobile Gerät angebracht ist.

7. Stapelbarer Transportwagen nach einem der vorhergehenden Ansprüche, **dadurch gekennzeichnet, dass** der einteilig gebildete Handgriff (7) mit Kindersitz (9) und/oder Korb (8) mindestens eine weitere Halterung für ein mobiles Gerät wie z.B. einen Handscanner und/oder einen Kaffeebecher aufweist.

8. Stapelbarer Transportwagen nach einem der vorhergehenden Ansprüche, **dadurch gekennzeichnet, dass** der einteilig gebildete Handgriff (7) mit Kindersitz (9) an seinem Boden eine Ausnehmung (9.2) aufweist.

9. Stapelbarer Transportwagen nach einem der vorhergehenden Ansprüche, **dadurch gekennzeichnet, dass** der einteilig gebildete Handgriff (7) mit Kindersitz (9) und/oder Korb (8) einen Taschenhaken (9.3) aufweist.

## Claims

1. Nestable transport trolley having a wheel frame (2) and retainers (3) for hand baskets (4), as well as rollers (5) and a lower tray (6), wherein a handgrip (7) is arranged on the wheel frame (2) and wherein the trolley (1) further has a child seat (9) and/or a basket (8), wherein handgrip (7) and child seat (9), handgrip (7) and basket (8) or handgrip (7), basket (8) and child seat (9) are integrally formed, wherein the integrally formed handgrip (7) with child seat (9) and/or basket (8) is put onto the wheel frame (2),
**characterised in that**
the wheel frame (2) is formed of a flat-oval tube,
wherein the ends (7.1) of the handgrip (7) are designed hollow and with their cross-section correspondingly larger than the flat-oval tube that they are put onto the flat-oval tube and remain there permanently and thus a form-fitting connection is provided,
and wherein further an additional securing means can be employed, or in the case of a different shape or size of the cross-sections an adapter can be used.

2. Nestable transport trolley according to claim 1,
**characterised in that** the integrally formed handgrip (7) with child seat (9) and/or basket (8) is made of plastic.

3. Nestable transport trolley according to one of the preceding claims, **characterised in that** the integrally formed handgrip (7) with child seat (9) and/or basket (8) is designed covering the entire area.

4. Nestable transport trolley according to one of the preceding claims, **characterised in that** the integrally formed handgrip (7) with child seat (9) and/or basket (8) has a coin-deposit system.

5. Nestable transport trolley according to one of the preceding claims, **characterised in that** the integrally formed handgrip (7) with child seat (9) and/or basket (8) provides a holder (9.1) for a mobile apparatus, such as, for example, a mobile phone.

6. Nestable transport trolley according to claim 5,
**characterised in that** the integrally formed handgrip (7) with child seat (9) and/or basket (8) has an ID number which is fixed in the holder (9.1) for the mobile apparatus.

7. Nestable transport trolley according to one of the preceding claims, **characterised in that** the integrally formed handgrip (7) with child seat (9) and/or basket (8) has at least one further holder for a mobile apparatus, such as, for example, a hand-held scanner and/or a coffee cup.

8. Nestable transport trolley according to one of the preceding claims, **characterised in that** the integrally formed handgrip (7) with child seat (9) has at its bottom a cutout (9.2) .

9. Nestable transport trolley according to one of the preceding claims, **characterised in that** the integrally formed handgrip (7) with child seat (9) and/or basket (8) has a bag hook (9.3).

## Revendications

1. Chariot de transport empilable comprenant un châssis (2) et des logements (3) pour des paniers (4), ainsi que des roulettes (5) et un plateau inférieur (6), une poignée (7) étant disposée sur le châssis (2) et le chariot (1) présentant en outre un siège pour enfants (9) et/ou un panier (8), la poignée (7) et le siège pour enfants (9), la poignée (7) et le panier (8) ou la poignée (7), le panier (8) et le siège pour enfants (9) étant réalisés d'une seule pièce,
la poignée (7) réalisée d'une seule pièce avec le siège pour enfants (9) et/ou le panier (8) étant enfoncée sur le châssis (2),
**caractérisé en ce que**
le châssis (2) est formé d'un tube ovale plat, les extrémités (7.1) de la poignée (7) étant réalisées sous forme creuse et leur section transversale étant plus grande que le tube ovale plat de telle sorte, qu'elles soient enfoncées sur le tube ovale plat et y restent de manière durable de telle sorte qu'une connexion par engagement par correspondance de formes soit assurée, et en outre un moyen de fixation supplémentaire pouvant être utilisé,
ou dans le cas d'une forme ou d'une dimension différente des sections transversales, un adaptateur pouvant être utilisé.

2. Chariot de transport empilable selon la revendication 1, **caractérisé en ce que** la poignée (7) réalisée d'une seule pièce avec le siège pour enfants (9) et/ou le panier (8) est fabriquée en matière plastique.

3. Chariot de transport empilable selon l'une quelconque des revendications précédentes,
**caractérisé en ce que** la poignée (7) réalisée d'une seule pièce avec le siège pour enfants (9) et/ou le panier (8) est réalisée sur toute la surface.

4. Chariot de transport empilable selon l'une quelconque des revendications précédentes,
**caractérisé en ce que** la poignée (7) réalisée d'une seule pièce avec le siège pour enfants (9) et/ou le panier (8) présente un système de consigne à pièce.

5. Chariot de transport empilable selon l'une quelconque des revendications précédentes,
**caractérisé en ce que** la poignée (7) réalisée d'une seule pièce avec le siège pour enfants (9) et/ou le panier (8) prévoit une fixation (9.1) pour un appareil portable comme par exemple un téléphone portable.

6. Chariot de transport empilable selon la revendication 5, **caractérisé en ce que** la poignée (7) formée d'une seule pièce avec le siège pour enfants (9) et/ou le panier (8) présente un numéro d'identification qui est appliqué dans le support (9.1) pour l'appareil portable.

7. Chariot de transport empilable selon l'une quelconque des revendications précédentes,
**caractérisé en ce que** la poignée (7) réalisée d'une seule pièce avec le siège pour enfants (9) et/ou le panier (8) présente au moins une fixation supplémentaire pour un appareil portable tel que par exemple un scanner à main et/ou un gobelet à café.

8. Chariot de transport empilable selon l'une quelconque des revendications précédentes,
**caractérisé en ce que** la poignée (7) réalisée d'une seule pièce avec le siège pour enfants (9) présente au niveau de son fond un évidement (9.2).

9. Chariot de transport empilable selon l'une quelconque des revendications précédentes,
**caractérisé en ce que** la poignée (7) réalisée d'une seule pièce avec le siège pour enfants (9) et/ou le panier (8) présente un crochet pour sac à main (9.3) .
